# EUROPEAN PATENT SPECIFICATION

(11) **EP 0 524 567 B1**
(45) Date of publication and mention of the grant of the patent: **24.01.1996**
(21) Application number: 92112329.5
(22) Date of filing: 18.07.1992
(51) Int. Cl.: B60C 11/11

(54) **A tread for a tire**
Lauffläche für Reifen
Bande de roulement pour pneumatiques

(30) Priority: 26.07.1991 US 736189
(43) Date of publication of application: 27.01.1993
(73) Proprietor: THE GOODYEAR TIRE & RUBBER COMPANY, Akron, Ohio 44316-0001 (US)
(72) Inventor: Croyle, Warren Lee, Akron, Ohio 44321 (US); Buenger, Jerold Robert, Hartville, Ohio 44632 (US); Consolacion, Rudy Espinosa, Akron, Ohio 44321 (US); Brayer, Randall Raymond, Uniontown, Ohio 44685 (US); Vaughn-Lindner, Deborah, Canal Fulton, Ohio 44614 (US)
(74) Representative: Leitz, Paul

(56) References cited:
- EP-A- 0 485 778
- DE-A- 3 720 908
- FR-A- 2 523 521
- GB-A- 2 231 538
- PATENT ABSTRACTS OF JAPAN vol. 10, no. 238 (M-508)(2294) 16 August 1986 & JP-A-61 71 208 (SUMITOMO RUBBER)

## Description

### Background of the Invention

The invention relates to a directional tread for a pneumatic tire, the tread having block elements with a negatively angled trailing edge surface.

Irregular treadwear on tires is a relatively recent problem which has been caused, in part, by the requirements imposed by recent changes in vehicle construction. Vehicles with broad specifications for both camber and toe-in, and front wheel drive vehicles, are particularly prone to causing irregular wear on tires. Front wheel drive vehicles, in comparison to the traditional rear wheel drive vehicles, tend to quickly wear out the drive tires and have a very slow treadwear rate on the free rolling tires. This slow wear rate on the free rolling tires, in combination with other factors, proves to quicken the onset, and magnify the relative amount of irregular treadwear.

Chassis designs with independent swing axle suspensions are also found to increase the possibility or severity of irregular wear.

Further complicating the problem is the fact that in the competitive tire industry, it is a goal to provide tires having treads that demonstrate good all weather traction and have distinctive designs. Because of design considerations, it is sometimes desirable to provide tread lugs of a length that traverses several zones of the footprint area of the tire. Because different stresses or forces are encountered by different zones of the footprint when a tire is in motion, depending on whether the zone is in the shoulder area, equatorial plane, near the leading edge of the footprint, near the trailing edge of the footprint or in the middle of the footprint, it has been discovered that some tire designs may be especially subject to irregular wear.

It has been theorized that in some tire designs irregular wear occurs when a leading edge of a relatively long tire lug is free of the footprint area of the tire while a second portion of the tread lug is still in the footprint area of the tire, and the different stresses encountered cause a distortion of the tread lug; and when the portion of the lug under compression starts to come out of the footprint area, the original shape of the lug is restored with a snap, and the motion or squirm associated with the snap wears the trailing portion of the lug against the road surface. It is also possible for wear to occur at the leading edge of the footprint because of the initial compression of the lug in the footprint. These wear problems are commonly known in the art as "heel and toe" wear.

In high performance tires having a radial carcass construction and a low aspect ratio, the footprint of the tire is axially wide and circumferentially short in length. As a result the tread exhibits a generally higher contact pressure at the shoulder of a tire. This high pressure loads the shoulder regions of the tread with greater compressive forces than at the center of the tread. The lugs or block elements at the shoulder compress as they enter the footprint and as the element leaves the ground contact area the element starts to return to its normal unloaded shape. The trailing edge of the block element, being the last portion of the element compressed, tends to be pulled by the freed leading portion thus resulting in a tendency to abraid the trailing edge against the road surface as the contact pressure abaits.

Although a very subtle phenomena the "toe and heel" wear on a tire tread is similar to a light pressure sanding procedure. A tire rotates about 800 times in a mile when traveling at 60 miles an hour and each element of the tread must flex 800 times per minute. As the speed of the tire increases the effects of "toe and heel" wear are increased.

Previous attempts to prevent such irregular wear include increasing the hardness of the rubber for the sidewalls of laterally extending lugs, increasing the angle of inclination of the sidewalls of lateral grooves, decreasing the groove depth, and adding circumferential buttresses or bridges in the lateral groove, all in an attempt to reduce the amount of slip or relative movement of the element with respect to the road.

The above mentioned attempts while being of limited success with regard to "toe and heel" wear have generally resulted in a loss of traction.

Document DE-A-37 20 908 discloses a directional tread according to the preamble of claim 1 where the block elements adjacent to the lateral edges have a negative angular orientation with respect to a radial direction.

The present invention allows reduction of the "toe and heel" wear without sacrificing traction. The invention, as defined in the claims, very subtly extends the trailing edge and softens the elements spring rate at the edge by incorporating a specific negative angled wall or undercut.

### Definitions

"Axial" and "axially" are used herein to refer to lines or directions that are parallel to the axis of rotation of the tire.

"Circumferential" means lines or directions extending along the perimeter of the surface of the annular tread perpendicular to the axial direction.

"Radial" and "radially" are used to mean directions radially toward or away from the axis of rotation of the tire.

"Lateral" means an axial direction.

"Leading edge" means an edge of a block element, the edge being angularly oriented over a majority of its length between 0° and 45° relative to a plane parallel to the axis of rotation and wherein the trailing edge enters the footprint of a forward rolling tire prior to the circumferentially aligned remaining portions of the block element.

"Trailing edge" means an edge of a block element, the edge being angularly oriented over a majority of its length between 0° and 45° relative to a plane parallel to the axis of rotation and wherein the trailing edge is the last portion of the block element to enter the footprint of a forward rolling tire relative to the circumferentially aligned portions of the block element.

"Compensated Tread Width" means the tread width multiplied by the aspect ratio.

"Aspect Ratio" of a tire means the ratio of the section height to the section width.

"Footprint" means the contact patch or area of contact of the tire tread with a flat surface at zero speed and under normal load and pressure, including the area occupied by grooves as well as the tread elements.

"Net-to-gross" means the total area of ground contacting tread elements within the footprint divided by the gross area of the footprint.

"Groove" means an elongated void area in a tread that may extend circumferentially or laterally about the tread in a straight, curved, or zig-zag manner. Circumferentially and laterally extending grooves sometimes have common portions and may be subclassified as "wide", "narrow", or "slot". The slot typically is formed by steel blades inserted into a cast or machined mold or tread ring therefor. In the appended drawings, slots are illustrated by single lines because they are so narrow. A "slot" is a groove having a width in the range from about 0.2% to 0.3% of the compensated tread width, whereas a wide groove has a width (W) greater than 2% of the compensated tread width, an intermediate width groove has a width 1/3 to 3/4 W, and a narrow groove has a width of 1/10 to 1/3 W. The "groove width" is equal to tread surface area occupied by a groove or groove portion, the width of which is in question, divided by the length of such groove or groove portion; thus, the groove width is its average width over its length. Grooves, as well as other voids, reduce the stiffness of the tread regions in which they are located. Slots often are used for this purpose, as are laterally extending narrow or wide grooves. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves which they interconnect, they are regarded as forming "tie bars" tending to maintain a rib-like character in the tread region involved.

"Sipe" means a small slot molded into the tread elements of a tire that subdivide the tread surface and improves tractions.

"Inside Shoulder" means the shoulder nearest the vehicle.

"Outside Shoulder" means the shoulder farthest away from the vehicle.

"Rib" means a circumferentially extending strip of rubber on the tread which is defined by at least one circumferential groove and either a second such groove or a lateral edge, the strip being laterally undivided by full-depth grooves.

"Tread Element" means a rib or a block element.

"Equatorial plane (EP)" means the plane perpendicular to the tire's axis of rotation and passing through the center of its tread.

### Brief Description of the Drawings

Fig. 1 is a perspective of a tire having a tread made in accordance with the present invention.

Fig. 2 is a plan view of the tread pattern of Fig. 1, the arrow indicating the direction of forward travel.

Fig. 3. is a cross-sectional view of a portion of the tread taken along lines 3-3 in Fig. 2.

Fig. 4 is a cross-sectional view of an alternative embodiment.

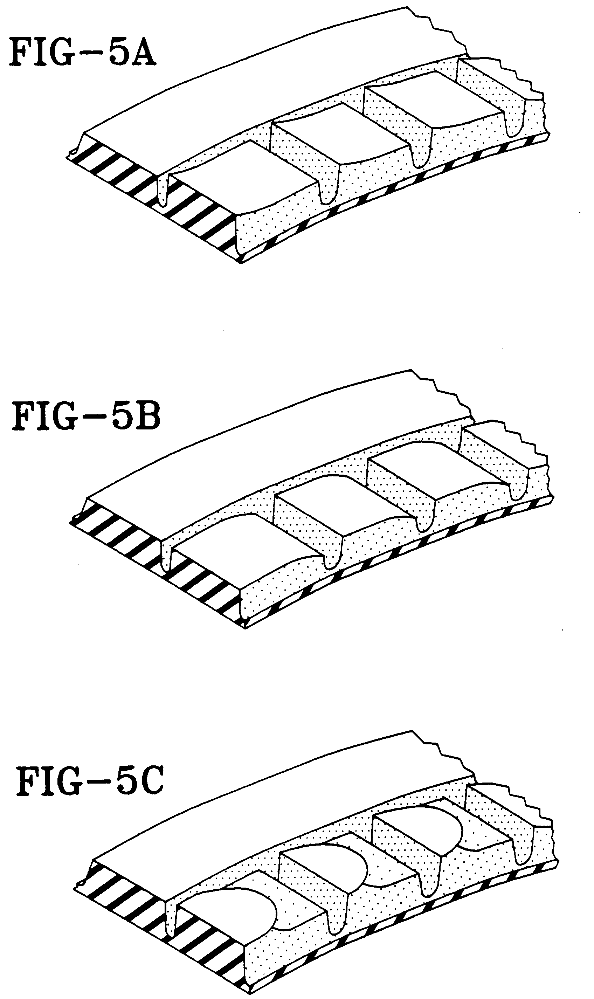

Fig. 5A, 5B, 5C are perspective views of a portion of a tread exhibiting various forms of heel-toe wear.

### Detailed Description

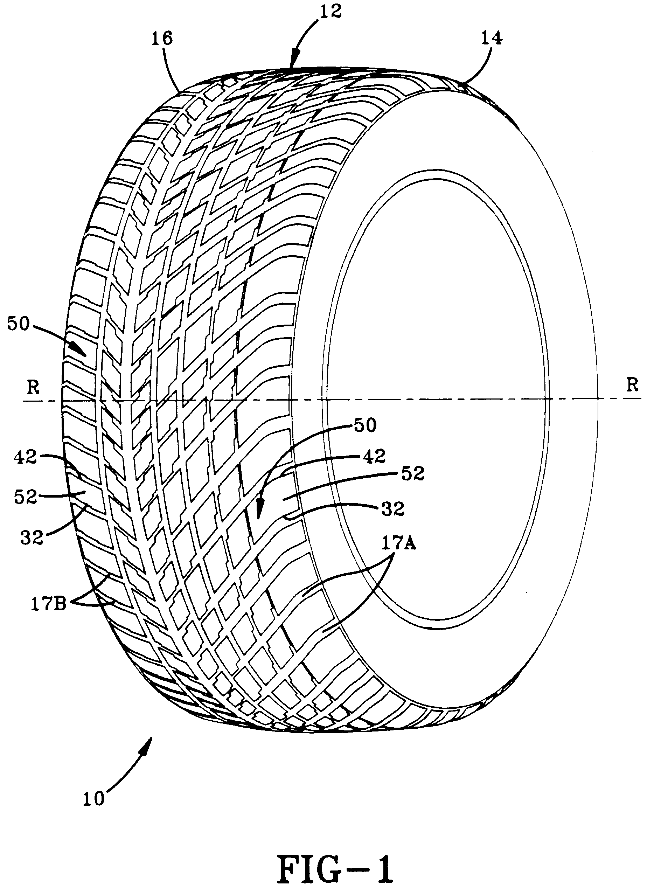

In Fig. 1, a tread 12 of the present invention is shown in annular form attached to a pneumatic tire 10.

The illustrated tread 12 is the subject of US-A-5360043. The tread 12 has a net-to-gross ratio of greater than 60%.

The tread 12 as illustrated has a changing angular variation of the circumferential groove walls. This causes an increase in lateral stiffness to be accomplished without sacrificing the ground contacting surface area of the tread elements or the wet traction capability of the tire. The detailed description can be found in patent application EP-A-524562.

The illustrated tread 12 incorporates the use of two independent pitches. The pitches differing in number, lengths, and orientation. The detailed description of the pitching is described in patent application EP-A-524568.

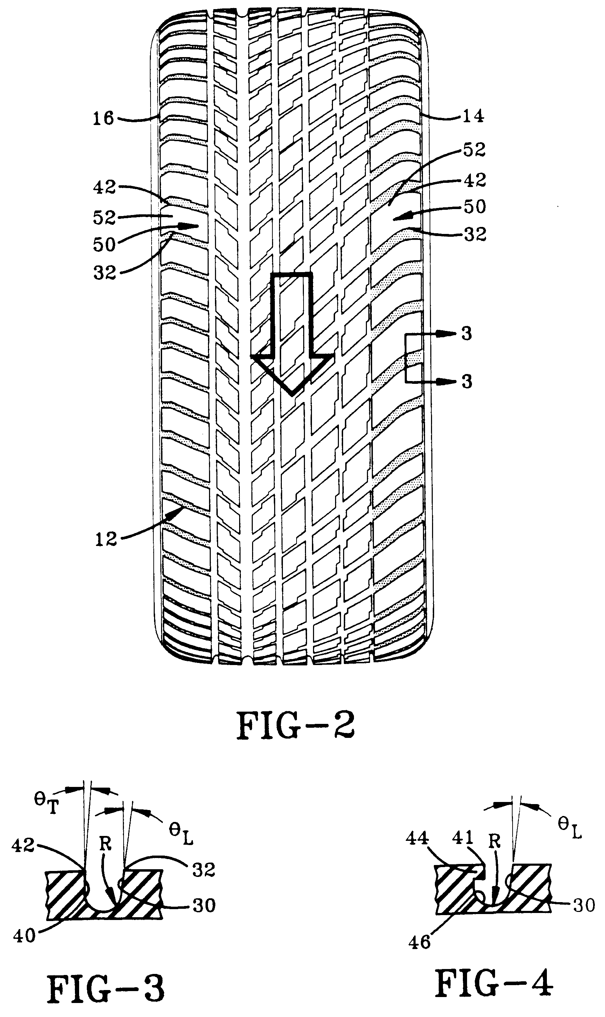

The tread 12 as further illustrated in Fig. 2 has a directional tread pattern, the tread having a specific direction of forward travel when attached to a vehicle.

Directional treads have grooves and associated block elements that have superior traction and handling characteristics in a specific direction of travel. Conventional non-directional treads have tread patterns designed wherein the tire can be attached to a vehicle without a preferred direction of travel. The use of directional tread patterns enables the tire designer to optimize the tread configuration for forward travel eliminating the dual travel design constraint. The use of directional treads is increasing in conjunction with the complexity and refinement of vehicle suspension systems. This is particularly true with the high performance cars.

The direction of forward travel of the tread of Fig. 2 is indicated by the superimposed arrow.

The tread has an axis R and a pair of lateral edges 14, 16. The shoulder regions of the tire are adjacent the lateral edges 14, 16. The block elements 50 adjacent the lateral edges 14, 16 have a ground contacting surface 52. The ground contacting surface 52 extends circumferentially from a leading edge 32 to a trailing edge 42. The leading edge 32 enters the footprint of the tire first. As the tire rotates in a forward direction, the trailing edge 42 enters the footprint. A continuation of tire rotation reveals that the leading edge 32 leaves ground contact while the trailing edge 42 remains under compression. The leading edge 32, being free to return to an undeflected state, tends to pull the constrained trailing edge 42 creating a shear stress. As the trailing edge 42 reacts to the force it snaps free of ground contact.

As illustrated in Fig. 3 the ground contacting surface 52 of the block element 50 can be designed with an extended trailing edge 40. The element 50 has a leading edge surface 30 having a conventional positive angle of inclination θ_{L}, the angle being measured relative to the radial direction. The element 50 has a trailing edge surface 40 that is angularly inclined negatively relative to the radial direction at an angle θ_{T}.

The negatively angled edge surface 40 holds the trailing edge 42 of the block element 50 within the tire footprint longer and as the tire rotates the shear force created by the freed leading edge 32 is absorbed over more area. The trailing surface edge 40, being angled negatively, actually weakens or softens the compressive forces created by the vehicle weight and the road contact. If the element 50 is viewed as a spring the spring rate tends to be less at the trailing edge. The resultant effect is the trailing edge surface 40 moves away from the load with a reduction in contact pressure occurring at the critical point when the trailing edge 42 is coming out of ground contact.

This reduction in pressure is believed to reduce the abraiding effects normally associated with toe and heel wear.

It is believed that a negative angular orientation in the range of -8° to -1° relative to the radial direction will reduce the toe and heel wear phenomena. For ease of manufacture the tire 10 preferably should be designed with a -4° to -1° angular orientation. The molding of negatively angled surfaces relative to the radial direction results in undercuts in the molded tread 12. It is therefore desirable from a processing perspective to limit the negative orientation. In a tire of the present invention improved wear performance is anticipated with an angle θ_{T} as low as -1°.

An alternative to a trailing edge surface 40 having a negative θ_{T} is to have compound trailing edge surfaces. As shown in Fig. 4 the trailing edge can be a cantilevered lip 44 overhanging a lower surface 46. In such design the tread will have an undercut which will reduce the compression forces as the trailing edge 41 leaves the footprint of the tire.

Ideally any undercut should project minimally. That is the undercut should only be as large as necessary to achieve satisfactory heel-to-toe wear.

In experimental tests, a Goodyear Eagle® "Gatorback" ZR50 tire was constructed. The tire had a θ_{T} of -8°. The test tire was of a P245/50-ZR16 size. As a control a standard Goodyear Eagle® Gatorback tire was tested. The control tire had a θ_{T} of +3° which is a conventional groove wall angle with no undercut.

The negatively angled grooves reduced the severity of heel and toe wear at the shoulder by 43% as compared to the control tire at the end of a 9,000 mile treadwear test. There was no degradation in global treadwear as a result of the groove angle change. At speeds above 70 mph the hydroplaning performance was slightly lower than the control. It was speculated that the trailing edge of the block element rolled into the groove void. It was recommended that the negative angle be reduced to the -4° to -1° preferred range.

## Claims

1. A directional tread (12) for a tire (10), the tread when annularly configured having an axis (R) and a pair of lateral edges (14,16) perpendicular to the axis, the tread having a plurality of grooves, a plurality of block elements (50) spaced between the grooves, the block elements extending radially outwardly from the grooves and being located circumferentially around the tread, the block elements having leading (30) and trailing (40) edge surfaces relative to the direction of forward tire travel, the leading and trailing edge surfaces extending radially outwardly from the groove and the block elements adjacent to the lateral edges (14, 16) having a trailing edge surface (40) that has negative angular orientation θ_{T} relative to the radial direction characterized in that the negative angular orientation θ_{T} is in the range of -8° to -1°.

2. The tread of claim 1 wherein the trailing edge surface includes an undercut relative to the radial direction.

3. The tread of claim 1 wherein the trailing edge surface (42) has a negative angular orientation θ_{T} in the range of -4° to -1°.

4. The tread of claim 1 or 2 wherein the tread has a net-to-gross ratio of greater than 60%.

## Patentansprüche

1. Gerichtetes Profil (12) für einen Reifen (10), wobei das Profil eine Achse (R) und ein Paar von Lateralkanten (14, 16) senkrecht zu der Achse aufweist, wenn das Profil ringförmig ausgebildet ist, wobei das Profil eine Vielzahl von Rillen und eine Vielzahl von Klotzelementen (50) aufweist, welche zwischen den Rillen beabstandet sind, wobei die Klotzelemente sich radialwärts nach außen von den Rillen erstrecken und umfänglich um das Profil angeordnet sind, wobei die Klotzelemente vordere (30) und hintere (40) Kantenflächen relativ zu der Vorwärtsbewegungs richtung aufweisen, wobei sich die vorderen und hinteren Kantenflächen radialwärts nach außen von der Rille erstrecken, und die Klotzelemente benachbart zu den Lateralkanten (14,16) eine hintere Kantenfläche (40) aufweisen, welche eine negative winkelmäßige. Orientierung θ_{T} relativ zu der radialen Richtung aufweist, dadurch gekennzeichnet, daß die negative winkelmäßige Orientierung θ_{T} in dem Bereich von -8° bis -1° liegt.

2. Profil nach Anspruch 1, wobei die hintere Kantenfläche relativ zu der radialen Richtung einen Hinterschnitt aufweist.

3. Profil nach Anspruch 1, wobei die hintere Kantenfläche (42) eine negative winkelmäßige Orientierung θ_{T} in dem Bereich von -4° bis -1° aufweist.

4. Profil nach Anspruch 1 oder 2, wobei das Profil ein Netto-zu-Brutto-Verhältnis von mehr als 60 % aufweist.

## Revendications

1. Bande de roulement directionnelle (12) pour un bandage pneumatique (10), la bande de roulement, lorsqu'elle est de configuration annulaire, possédant un axe (R) et une paire de bords latéraux (14, 16) perpendiculaires à l'axe, la bande de roulement possédant plusieurs rainures, plusieurs éléments de blocs (50) espacés entre les rainures, les éléments de blocs s'étendant à l'extérieur des rainures en direction radiale et étant situés en direction circonférentielle autour de la bande de roulement, les éléments de blocs possédant des surfaces de bords avant (30) et arrière (40) par rapport à la direction de marche avant du bandage pneumatique, les surfaces de bords avant et arrière s'étendant à l'extérieur de la rainure en direction radiale et les éléments de blocs adjacents aux bords latéraux (14, 16) possédant une surface de bord arrière (40) qui possède une orientation angulaire négative θ_{T} par rapport à la direction radiale, caractérisée en ce que l'orientation angulaire négative θ_{T} se situe dans le domaine de -8° à -1°.

2. Bande de roulement selon la revendication 1, dans laquelle la surface de bord arrière englobe un évidement par rapport à la direction radiale.

3. Bande de roulement selon la revendication 1, dans laquelle la surface de bord arrière (42) possède une orientation angulaire négative θ_{T} dans le domaine de -4° à -1°.

4. Bande de roulement selon la revendication 1 ou 2, dans laquelle la bande de roulement possède un rapport net-brut supérieur à 60%
